# EUROPÄISCHE PATENTSCHRIFT

(11) **EP 4 460 542 B1**
(45) Veröffentlichungstag und Bekanntmachung des Hinweises auf die Patenterteilung: **16.07.2025**
(21) Anmeldenummer: 24702306.2
(22) Anmeldetag: 25.01.2024
(51) Int. Cl.: C09J 4/00, F16B 33/06, F16B 39/22, C08J 3/24, C08F 222/10

(54) **WÄSSRIGES HÄRTBARES MEHRKOMPONENTEN-SYSTEM**
AQUEOUS CURABLE MULTI-COMPONENT SYSTEM
SYSTÈME MULTICOMPOSANTS DURCISSABLE AQUEUX

(30) Priorität: 26.01.2023 DE 102023101961
(43) Veröffentlichungstag der Anmeldung: 13.11.2024
(73) Patentinhaber: omniTECHNIK Mikroverkapselungs GmbH, 80993 München (DE)
(72) Erfinder: THAU, Sebastian, 80993 München (DE); FEY, Thomas, 80993 München (DE); LÜDTKE, Karin, 80993 München (DE); STIRNER, Manuela, 80993 München (DE); BERISHA, Agron, 80993 München (DE)
(74) Vertreter: SSM Sandmair
(86) Internationale Anmeldenummer: PCT/EP2024/051788
(87) Internationale Veröffentlichungsnummer: WO 2024/156809

(56) Entgegenhaltungen:
- EP-A1- 3 165 584
- US-A1- 2007 021 533

## Beschreibung

Die vorliegende Erfindung betrifft ein Mehrkomponentensystem, insbesondere Zweikomponentensystem auf Wasserbasis enthaltend Kapseln, das durch Aufbrechen der Kapseln eine Vermischung der Bestandteile ermöglicht und den Prozess der Selbsthärtung initiiert. Das Mehrkomponentensystem ist insbesondere als Beschichtung geeignet, die zur Abdichtung und/oder als Klebstoff zur Befestigung von Befestigungsmitteln wie Schrauben dienen kann.

Klebende oder aushärtende Beschichtungen von Schrauben sind im Stand der Technik bekannt. Durch solche Beschichtungen wird beispielsweise im Automobilbau oder im Hoch- und Tiefbau das ungewollte Lösen oder Lockern einer Schraubverbindung infolge von Korrosion oder Vibration verhindert. Bekannt sind Beschichtungen, die unmittelbar vor Anwendung der Schraube in flüssiger Form aufgebracht werden müssen. Vorbeschichtete Schrauben haben dagegen den Vorteil, dass die Beschichtung standardisiert zuverlässig aufgetragen werden kann. Fehlerhafte Verschraubungen können auf diese Weise vermieden werden. In solchen Anwendungen vorbeschichteter Schrauben zum Sichern und Versiegeln wird die Polymerisation polymerisierbarer Bestandteile der Beschichtung in der Regel beim Verbinden zweier Platten mittels einer Schraube initiiert.

Eine Klebesicherung kann prinzipiell durch anaerobe Klebstoffe erfolgen. Anaerobe Klebstoffe, auch als Einkomponentenklebstoffe oder "flüssige Kunststoffe" bezeichnet, verbleiben im flüssigen Zustand und polymerisieren nicht, solange die Anwesenheit von Sauerstoff eine radikalische Polymerisation verhindert. Werden mit einem solchen flüssigen Klebstoff beschichtete Schrauben verschraubt, wird in Kontaktstellen in der Anwesenheit von Metallionen aus Schraube oder Gewinde bzw. zu verschraubendem Material und Abwesenheit von Sauerstoff die Polymerisation initiiert und die Schraube gesichert und abgedichtet. Ein grundsätzliches Problem solcher Klebstoffe stellt die flüssige Natur der Beschichtung dar. Vorschläge, wie die Grifffestigkeit von Einkomponentenklebstoffen als Vorbeschichtung zur Schraubensicherung verbessert werden kann, schließen die WO 2017/068196 A1 ein, worin polymerisierbares Material mit einem Schmelzpunkt von mindestens 30 °C eigesetzt wird.

Zweikomponentenklebstoffe unterscheiden sich von den anaeroben Klebstoffen dadurch, dass zur Polymerisation keine Metallionen anwesend sein müssen und sie auch in der Anwesenheit von Sauerstoff polymerisieren. Initiator bzw. Härter liegen demnach von den polymerisierbaren Bestandteilen getrennt vor. Eine Klebesicherung kann dann beispielsweise dadurch erzielt werden, dass Mikrokapseln, die einen zu polymerisierenden Klebstoff enthalten, beim Verschrauben zerstört werden und der freigesetzte Klebstoff mit in der Beschichtung enthaltenem Härter in Kontakt kommt, was eine Polymerisation initiiert. DE 10 2011 119 140 A1 beschreibt einen solchen Überzug für ein Gewindeteil wie zum Beispiel eine Schraube, der Mikrokapseln mit einem polymerisierbaren Klebstoff und zusätzlich nichtreaktive Bestandteile zur Erzielung einer Klemmwirkung enthält. Klebebeschichtungen auf der Grundlage von beispielsweise verkapselten Epoxidkomponenten mit Aminhärter, auf der Grundlage von Polyestersystemen oder alternativ auf der Grundlage von (Meth)acrylat und Radikalstartern sind im Prinzip als mikroverkapselte Mehrkomponentensysteme bekannt.

Mikrokapseln werden unter anderem in der WO 95/33554 A1 beschrieben.

Im Stand der Technik sind verschiedene Methoden bekannt, die Beschichtung auf das Befestigungsmittel, beispielsweise die Schraube aufzubringen. Eine Methode ist beispielsweise, die Beschichtungszusammensetzung oder Teile der Beschichtungszusammensetzung aufzuschmelzen und als Schmelze aufzubringen. (Mikro-) Kapseln enthaltende Komponenten werden dann gegebenenfalls in einem weiteren Schritt in einem flüssigen organischen Trägermittel aufgebracht, wobei dieses Trägermittel beispielsweise in der DE 10 2011 119 140 A1 als ein durch UV-Licht härtbares Trägermittel beschrieben wird, das die Beschichtung so mit einem Lack überzieht. Ein solcher Lack kann auch eingesetzt werden, um eine flüssige bis viskose polymerisierbare Klebezusammensetzung vor Auslaufen zu schützen und grifffest zu machen. Lacküberzüge sind jedoch grundsätzlich anfällig für mechanische Beschädigungen, die bei der Benutzung und Aufbewahrung der Schrauben kaum zu vermeiden sind. Beschichtungen, die ohne eine eigene Schutzschicht, beispielsweise einen solchen Lack auskommen, sind daher wünschenswert. Zur Verringerung von gesundheitlichen Schäden, die von flüchtigen organischen Verbindungen (volatile organic compounds, VOC) ausgehen, unternimmt die Industrie zudem Anstrengungen, aushärtbare klebende Beschichtungen in wässriger Form aufzutragen und so die VOCs zu vermeiden.

Ein wässriges System wird in der WO 2011/047738 als eine wässrige Zusammensetzung von polymerisierbaren Acrylatkomponenten und verkapseltem Radikalstarter als Initiator beschrieben. EP 3 165 584 A1 beschreibt ein weiteres wässriges System auf Acrylatbasis mit vorzugsweise verkapseltem Radikalstarter.

Weiterhin werden jedoch Mehrkomponentensysteme benötigt, die sowohl bei Prozessparametern, bei der Prozesssicherheit und auch bei der Topfzeit ("Potlife"), wie auch bei den erzielten Eigenschaften und Festigkeiten, Losbrechmomenten und Dichtigkeiten Vorteile gegenüber den bekannten Systemen bieten. Darüber hinaus soll das Mehrkomponentensystem eine einfach auf Befestigungsmittel wie Schrauben bzw. Gewindeschrauben aufzutragende Beschichtung ergeben, die grifffest, trocken und bei üblicher Nutzung mechanisch haltbar und chemisch stabil ist.

Die vorliegende Erfindung löst mindestens eine dieser Aufgaben und gegebenenfalls weitere Aufgaben durch ein Mehrkomponentensystem umfassend eine erste Komponente, eine zweite Komponente und gegebenenfalls eine oder mehrere weitere Komponenten,
wobei die erste Komponente Kapseln enthaltend polymerisierbares (meth)acrylatfunktionelles Bindemittel und Wasser umfasst und
wobei die zweite Komponente Peroxodisulfat-Initiator, verkapselten Dibenzoylperoxyd-Initiator und Wasser umfasst.

In einem zweiten Aspekt der Erfindung wird mindestens eine dieser Aufgaben gelöst durch eine Zusammensetzung, hergestellt durch Vermischung der Komponenten des Mehrkomponentensystems der Erfindung.

In einem dritten Aspekt der Erfindung wird mindestens eine dieser Aufgaben gelöst durch die Verwendung des Mehrkomponentensystems oder der Zusammensetzung der Erfindung zur Verbesserung der Topfzeit, der Prozesssicherheit und/oder zur Beschichtung eines Befestigungsmittels, insbesondere einer Schraube, um das Losbrechmoment des Befestigungsmittels zu erhöhen und/oder die Dichtigkeit der Verbindung des Befestigungsmittels zu verbessern.

In einem vierten Aspekt der Erfindung wird mindestens eine dieser Aufgaben gelöst durch ein Befestigungsmittel, insbesondere Schraube, dadurch gekennzeichnet, dass es mit der erfindungsgemäßen Zusammensetzung beschichtet ist.

Wie beschrieben umfasst das Mehrkomponentensystem der Erfindung eine erste Komponente, eine zweite Komponente und gegebenenfalls eine oder mehrere weitere Komponenten,
wobei die erste Komponente Kapseln enthaltend polymerisierbares (meth)acrylatfunktionelles Bindemittel und Wasser umfasst und
wobei die zweite Komponente Peroxodisulfat-Initiator, verkapselten Dibenzoylperoxid-Initiator und Wasser umfasst. Dies ist so zu verstehen, dass das Mehrkomponentensystem der Erfindung bevorzugt aus der ersten Komponente und der zweiten Komponente besteht und gegebenenfalls eine zusätzliche oder weitere Komponenten enthalten kann. Diese Komponenten können getrennt vorliegen oder, beispielsweise zur Anwendung, in vermischter Form.

Das Vorliegen der beiden unterschiedlichen Initiatoren in der zweiten Komponente, von denen der Dibenzoylperoxid-Initiator verkapselt ist, bewirkt überraschend erhöhte Klebstoffwirkung, was sich bei Anwendung auf Gewindeschrauben in überraschend erhöhten Losbrechmomenten zeigt.

Bevorzugt dient das Mehrkomponentensystem (bei den bevorzugt zwei Komponenten: das Zweikomponentensystem) der Erfindung als Dichtmittel und/oder Klebstoff zur Beschichtung von Befestigungsmitteln, insbesondere zur Beschichtung von Schrauben, beispielsweise Gewindeschrauben oder auch von Innengewinden, wie sie in vielfältigen Bereichen Anwendung finden. Genannt seien industrielle Anwendungen, beispielsweise in der Automobilindustrie, in der Elektronikindustrie. Grundsätzlich ist die Erfindung überall dort von Vorteil, wo eine zuverlässige Schraubensicherung gegen Losrütteln benötigt wird.

Bevorzugt umfasst die erste Komponente Kapseln, insbesondere Mikrokapseln, wobei die Kapseln, insbesondere Mikrokapseln, eine Hülle und eine innere Phase aufweisen. Die die innere Phase enthält bevorzugt polymerisierbares (meth)acrylatfunktionelles Bindemittel und optional Vernetzer, insbesondere (meth)acrylfunktionellen Vernetzer, und bevorzugt einen oder mehrere Beschleuniger.

Geeignete polymerisierbare (meth)acrylatfunktionelle Bindemittel sind beispielsweise: (meth)acryliertes Epoxyharz, (meth)acryliertes Polyurethan, (meth)acrylatfunktionelle Polyester und besonders (meth)acrylatfunktionelles Bindemittel auf Bisphenol-A-Basis oder Bisphenol-Basis (e.g. Bisphenol-A-Dimethacrylat), (meth)acrylatfunktionelles Bindemittel auf Novolak -Basis, (meth)acrylatfunktionelles Bindemittel auf Bisphenol-A-Epoxy Basis oder Bisphenol-Epoxy Basis (e.g. Bisphenol-A-Diglycidylmethacrylat); (meth)acrylatfunktionelles Bindemittel auf Basis von Epoxy-Novolacken, (meth)acrylatfunktionelles Bindemittel auf Basis von ethoxylierten Novolacken und Gemische davon.

Der Vernetzer kann erfindungsgemäß bevorzugt ausgewählt werden aus (meth)acrylfunktionellen Monomeren, beispielsweise aus Monomeren mit zwei, bevorzugt drei oder auch mehreren (Meth)acrylfunktionen. Hierunter fallen beispielsweise Divinylbenzen (DVB); 1,3-Butandiol-dimethacrylat (BGDMA); Tripropylenglycol-diacrylate (TRPGDA); Trimethylolpropanetrimethacrylat (TMPTMA), Isocyanurattri(meth)acrylat, PETA Pentaerythritoltetra(meth)acrylat, DiPETA; Dipentaerythritolpentaacrylat, Dipentaerythritoltetra(meth)acrylat, Dipentaerythritoltetra(meth)acrylat etc und/oder Trimethylolpropantriacrylat (TMPTA). Besonders bevorzugt ist erfindungsgemäß Trimethylolpropan-trimethacrylat.

Die erste Komponente kann erfindungsgemäß vorteilhaft zusätzlich eine oder mehrere unverkapselte polymerisierbare Komponente(n) enthalten, bevorzugt unverkapseltes Reaktivbindemittel und/oder Reaktivverdünner, optional zusätzlich Füllstoffe und/oder Verdicker.

Unverkapselte Reaktivbindemittel können aus denselben reaktiven Bindemitteln ausgewählt sein wie das oder die verkapselte(n) polymerisierbare(n) (meth)acrylatfunktionelle(n) Bindemittel der ersten Komponente. Sie können bevorzugt jeweils unabhängig dasselbe oder ein anderes polymerisierbares Bindemittel sein. Darüber hinaus können sie beispielsweise auch ausgewählt sein aus doppelbindungsfunktionellen polymerisierbaren Polyurethanen und/oder doppelbindungsfunktionellen Polyestern oder Polycarbonaten wie sie zum Beispiel von Harzherstellen wie Allnex, Alberdingk Boley, DSM Neoresins und vielen anderen Harzherstellern, die der Fachmann kennt, kommerziell erhältlich sind. Besonders bevorzugte unverkapselte Reaktiv-Bindemittel sind erfindungsgemäß doppelbindungsfunktionelle polymerisierbare Polyurethanene und/oder Polyester Lux 481; Ucecoat 7738, Ucecoat 7999. Ucecoat 7733 und ähnliche kommerzielle Harze wie sie z.B. für strahlenhärtbare Systeme wie Holzlacke, Klebstoffe etc. verwendet werden.

Geeignete Reaktivverdünner sind beispielsweise alkoxylierte Acryloylverbindungen wie (ethoxyliertes)₂₋₄₀ 1,6-Hexandioldi(meth)acrylat, (propoxyliertes)₂₋₄₀ 1,6-Hexandioldi(meth)acrylat, (ethoxyliertes)₂₋₄₀ 1,4-Butandioldi(meth)acrylat, (propoxyliertes)₂₋₄₀ 1,4-Butandioldi(meth)acrylat, (ethoxyliertes)₂₋₄₀ 1,3-Butandioldi(meth)acrylat, (propoxyliertes)₂₋₄₀ 1,3-Butandioldi(meth)acrylat, (ethoxyliertes)₂₋₄₀ Ethylenglycoldi(meth)acrylat, (propoxyliertes)₂₋₄₀ Ethylenglycoldi(meth)acrylat, (ethoxyliertes)₂₋₄₀ Propylenglycoldi(meth)acrylate (propoxyliertes)₂₋₄₀ Propylenglycoldi(meth)acrylat, (ethoxyliertes)₂₋₄₀ 1,4-Cyclohexandimethanoldi(meth)acrylat, (propoxyliertes)₂₋₄₀ 1,4-Cyclohexandimethanoldi(meth)acrylat, (ethoxyliertes)₂₋₄₀ Bisphenol-A-di(meth)acrylat, (propoxyliertes)₂₋₄₀ Bisphenol-A-di(meth)acrylat, (ethoxyliertes)₃₋₆₀ Glyceroltri(meth)acrylat, (propoxyliertes)₃₋₆₀ Glyceroltri(meth)acrylat, (ethoxyliertes)₃₋₆₀ Trimethylolpropantri(meth)acrylat, (propoxyliertes)₃₋₆₀ Trimethylolpropantri(meth)acrylat, (ethoxyliertes)₃₋₆₀ Isocyanurattri(meth)acrylat, (ethoxyliertes)₃₋₆₀ Isocyanurattri(meth)acrylat, (ethoxyliertes)₄₋₈₀ Pentaerythritoltetra(meth)acrylat, (propoxyliertes)₄₋₈₀ Pentaerythritoltetra(meth)acrylate, (ethoxyliertes)₆₋₁₂₀ Dipentaerythritoltetra(meth)acrylat, (propoxyliertes)₆₋₁₂₀ Dipentaerythritoltetra(meth)acrylat. Besonders bevorzugt sind Polyethylenglycoldimethacrylat, insbesondere (Polyethylen)₂₋ₓₓglycoldimethacrylat, und/oder Methacryloylethoxysuccinat.

Vorteilhaft kann erfindungsgemäß die erste Komponente mindestens zwei verschiedene Arten Kapseln umfassen, die sich mindestens in dem Material ihrer jeweiligen Hülle unterscheiden, wobei bevorzugt eine Kapselart eine Melamin-Formaldehyd-Hülle und eine zweite Kapselart eine Gelatine-Hülle aufweist und wobei bevorzugt beide Kapselarten Mikrokaseln sind. Es hat sich überraschend gezeigt, dass bei der Verwendung verschiedener Materialien für zwei verschiedene Kapselarten verlängerte Topfzeiten ("potlife") und eine erhöhte Prozesssicherheit sowie bei Aufbringen als Beschichtung von Gewindeschrauben verbesserte Losbrechmomente erzielt werden.

Die Kapselart mit der Melamin-Formaldehyd-Hülle besitzt typischerweise eine Größe von (d50 in [µm]) 1 - 100 bevorzugt 4 - 60 insbesondere 5 - 30 während die Kapselart mit der Gelatinehülle eine Größe von (d50 in [µm]) 80 - 250 bevorzugt 100 - 200 und insbesondere 120 -150 aufweist.

Erfindungsgemäß bevorzugt ist, wenn die erste Kapselart und die zweite Kapselart jeweils eine innere Phase aufweisen, die polymerisierbares (meth)acrylatfunktionelles Bindemittel, bevorzugt (meth)acryliertes Epoxyharz und optional Vernetzer umfasst, wobei Bindemittel und Vernetzer bevorzugt dieselben sind wie weiter oben ausgeführt.

Im Sinne der Erfindung besonders vorteilhaft ist, wenn die inneren Phasen der ersten Kapselart und der zweiten Kapselart die gleichen Bestandteile aufweisen, das heißt, dass sich die Kapseln dann im Wesentlichen lediglich in der Art ihrer Hülle unterscheiden.

Bevorzugt enthalten die Kapseln der ersten Komponente 10 bis 88 Gew.-%, besonders bevorzugt 30 bis 60 Gew.-% (meth)acrylatfunktionelles Bindemittel, 10 bis 88 Gew.-%, bevorzugt 20 bis 60 Gew.-% Vernetzer, insbesondere methacrylfunktionellen Vernetzer, und bis zu 2, insbesondere 0,2 bis 1 Gew.-% Beschleuniger, jeweils als Trockengewicht (Festkörper) bezogen auf das Trockengewicht der Kapseln der ersten Komponente.

Spezifischer und weiter bevorzugt können die Kapseln der ersten Komponente mit Melamin-Formaldehyd-Hülle enthalten:
12 bis 28 Gew.%, besonders bevorzugt 15 bis 25 Gew.-%, ganz besonders etwa 20 Gew.-% Hülle;
30 bis 50 Gew.-%, besonders bevorzugt 35 bis 45 Gew.-%, ganz besonders etwa 40 Gew. polymerisierbares (meth)acrylatfunktionelles Bindemittel;
30 bis 50 Gew.-%, besonders bevorzugt 35 bis 45 Gew.-%, ganz besonders etwa 40 Gew.-%Vernetzer;
0,1 bis 1,0 Gew.-%, besonders bevorzugt 0,3 bis 0,7 Gew.-%, ganz besonders etwa 0,5 Gew.-% Beschleuniger, jeweils bezogen auf den Festkörperanteil (Trockengewicht) der Kapseln.

Ebenfalls spezifisch und weiter bevorzugt können die Kapseln der ersten Komponente mit Gelatine-Hülle enthalten:
5 bis 20 Gew.%, besonders bevorzugt 7 bis 15 Gew.-% Hülle, ganz besonders etwa 10 Gew.-% Hülle;
35 bis 55 Gew.-%, besonders bevorzugt 40 bis 50 Gew.-%, ganz besonders etwa 45 Gew.-% polymerisierbares (meth)acrylatfunktionelles Bindemittel;
35 bis 55 Gew.-%, besonders bevorzugt 40 bis 50 Gew.-%, ganz besonders etwa 45 Gew.-% Vernetzer;
0,1 bis 1,0 Gew.-%, besonders bevorzugt 0,3 bis 0,7 Gew.-% Beschleuniger, ganz besonders etwa 0,5 Gew.-%, jeweils bezogen auf den Festkörperanteil (Trockengewicht) der Kapseln.

Erfindungsgemäß bevorzugt ist, wenn die polymerisierbaren Bestandteile der ersten Komponente im Wesentlichen radikalisch polymerisierbar sind.

Bevorzugte Beschleuniger gemäß der Erfindung sind beispielsweise Aminverbindungen wie Imidazol, 1,3-bis-4-Piperidylpropan, 1,6-Hexandiamin, Methylendianilin, flüssiges Polyamid dimerisierter ungesättigter Fettsäuren (Versamid125), reagiert mit Alkylendiamin, NN'Dimethylanilin, NN'Diethylanilin, Trimethylolamin, Triethanolamin ganz besonders bevorzugt ist NN'Diethylanilin.

Gemäß der Erfindung kann die zweite Komponente besonders bevorzugt unverkapselten wasserlöslichen Peroxodisulfat-Initiator und verkapselten Dibenzoylperoxyd-Initiator enthalten. Die den Dibenzoylperoxid-Initiator enthaltenden Kapseln, insbesondere Mikrokapseln, der zweiten Komponente weisen dabei bevorzugt eine Hülle, insbesondere eine Gelatine-Hülle, und eine innere Phase auf, wobei die innere Phase den Dibenzoylperoxid-Initiator bevorzugt dispergiert in Weichmacher, insbesondere phthalatfreiem Weichmacher enthält und wobei die den Dibenzoylperoxid-Initiator enthaltenden Kapseln, insbesondere Mikrokapseln der zweiten Komponente bevorzugt 4 bis 35, insbesondere 6 bis 25 Gew.-%, besonders bevorzugt 10 bis 15 Gew.-% Dibenzoylperoxid-Initiator dispergiert in 55 bis 90, insbesondere 60 bis 85 Gew.-%, besonders bevorzugt 70 bis 80 Gew.-% Weichmacher, insbesondere phthalatfreien Weichmacher enthalten, jeweils Trockensubstanz bezogen auf das Gewicht der Kapseln der zweiten Komponente. Die den Peroxid-Initiator enthaltende Kapselart hat bevorzugt eine Größe 130 - 300 bevorzugt 170 - 250 und insbesondere 190 -220 (d50 in [µm]).

Ganz besonders bevorzugt gemäß der Erfindung ist, wenn der Peroxodisulfat-Initiator Natriumperoxodisulfat-Initiator umfasst, bevorzugt Natriumperoxodisulfat-Initiator ist.

Das erfindungsgemäße Mehrkomponentensystem kann bevorzugt weitere Bestandteile enthalten, insbesondere nichtreaktives Harz, Wachs, Pigmente, pigmentaffine Polymere, Füllstoffe, Netzmittel, Biozide, Haftverbesserer, Entschäumer, Additive zur Entlüftung und/oder Rostinhibitoren.

Nichtreaktive Harze können beispielsweise ausgewählt sein unter üblichen kommerziell erhältlichen wässrigen Bindemitteln wie e.g. Wohrleecryl 7123 , Roskydal 850W und anderen, wie sie zum Beispiel von Harzherstellern wie Allnex, Alberdingk Boley, DSM Neoresins BASF und anderen dem Fachmann bekannten Harzherstellern kommerziell erhältlich sind.

Wachse, die beispielsweise zur Einstellung der Reibzahl dienen, können erfindungsgemäß beispielsweise ausgewählt sein unter kommerziell erhältlichen Polyethylen-Wasserwachsen von Wachsherstellern wie Byk (Cera), Deurex und anderen.

Pigmente können zur farblichen Markierung bestimmter Qualitäten dienen und sind beispielsweise übliche organische Farbstoffe und/oder anorganische Pigmente. Übliche pigmentaffine Harze können dazu dienen, weitere Bestandteile wie Pigmente zu binden/dispergieren. Vorteilhaft sind erfindungsgemäß beispielsweise Dispergieradditive die von dem Fachmann bekannten Additivherstellern wie Byk; EFKA, Tego kommerziell erhältlich sind, beispielsweise die Produkte der Disperbyk-Reihe.

Füllstoffe, die zur Verwendung in der Erfindung geeignet sind, umfassen anorganische und organische Füllstoffe, insbesondere beispielsweise Kaolinite, Calcite, Talk sowie reaktive Füllstoffe wie beispielsweise anorganische Füllstoffe, die mit reaktiven, mit Methacrylfunktionen ausgestattetem Silan überzogen sind. Erfindungsgemäß ist die Verwendung von Glimmer nicht bevorzugt.

Dem Fachmann sind übliche Netzmittel, Biozide, Haftverbesserer, Entschäumer, sowie Additive zur Entlüftung und/oder Rostinhibitoren, die in der Erfindung vorteilhaft Verwendung finden können, bekannt.

Das erfindungsgemäße Mehrkomponentensystem enthält bevorzugt, jeweils bezogen auf den Festkörperanteil ("solids"):
25 bis 55 Gewichtsteile, bevorzugt 30 bis 50 Gewichtsteile, insbesondere 36 bis 44 Gewichtsteile Kapseln enthaltend polymerisierbares (meth)acrylatfunktionelles Bindemittel;
0 bis 20 Gewichtsteile, bevorzugt 5 bis 17 Gewichtsteile, insbesondere 10 bis 14 Gewichtsteile unverkapseltes Reaktivbindemittel;
0 bis 3,8 Gewichtsteile, bevorzugt 0.5 bis 3 Gewichtsteile, insbesondere 1 bis 2,3 Gewichtsteile unverkapselter Reaktivverdünner;
1 bis 15 Gewichtsteile, bevorzugt 3 bis 10 Gewichtsteile, insbesondere 5 bis 8 Gewichtsteile Kapseln enthaltend Dibenzoylperoxid-Initiator;.
0,3 bis 5 Gewichtsteile, bevorzugt 0,6 bis 4 Gewichtsteile, insbesondere 0,9 bis 2 Gewichtsteile, besonders bevorzugt 1,1 bis 1,5 Gewichtsteile Peroxodisulfat-Initiator;
1 bis 70 Gewichtsteile, bevorzugt 10 bis 60 Gewichtsteile, insbesondere 20 bis 50 Gewichtsteile, besonders bevorzugt 30 bis 40 Gewichtsteile weitere Bestandteile.

Das heißt auch, dass beispielsweise in der Abwesenheit weiterer Bestandteile das erfindungsgemäße Mehrkomponentensystem bevorzugt enthält, bezogen auf den Festkörperanteil ("solids") des Systems:
25 bis 55 Gew.-%, bevorzugt 30 bis 50 Gew.-%, insbesondere 36 bis 44 Gew.-% Kapseln enthaltend polymerisierbares (meth)acrylatfunktionelles Bindemittel;
0 bis 20 Gew.-%, bevorzugt 5 bis 17 Gew.-%, insbesondere 10 bis 14 Gew.-% unverkapseltetes Reaktivbindemittel;
0 bis 3,8 Gew.-%, bevorzugt 0.5 bis 3 Gew.-%, insbesondere 1 bis 2,3 Gew.-% unverkapselter Reaktivverdünner;
1 bis 15 Gew.-%, bevorzugt 3 bis 10 Gew.-%, insbesondere 5 bis 8 Gew.-% Kapseln enthaltend Dibenzoylperoxid-Initiator;
0,3 bis 5 Gew.-%, bevorzugt 0,6 bis 4 Gew.-%, insbesondere 0,9 bis 2 Gew.-%, besonders bevorzugt 1,1 bis 1,5 Gew.-% Peroxodisulfat-Initiator;
1 bis 70 Gew.-%, bevorzugt 10 bis 60 Gew.-%, insbesondere 20 bis 50 Gew.-%, besonders bevorzugt 30 bis 40 Gew.-% weitere Bestandteile.

Dabei kann das erfindungsgemäße Mehrkomponentensystem beispielsweise als wässrige Aufschlämmung oder Dispersion in die Komponenten getrennt vorliegen. Das Verhältnis der Komponenten zueinander wird dabei bestimmt von den Festkörperanteilen der Bestandteile der Komponenten. Das erfindungsgemäße Mehrkomponentensystem kann als Zusammensetzung, beispielsweise in Form einer Aufschlämmung oder Dispersion, hergestellt durch Vermischung der wässrigen Komponenten des erfindungsgemäßen Mehrkomponentensystems vorliegen. Die Anteile der Bestandteile (Festkörperanteile) sind hier die entsprechenden Anteile des Mehrkomponentensystems.

Weder die absoluten noch die relativen Anteile werden von der jeweiligen zugesetzten Menge an Wasser beeinflusst. Die Menge zugesetzten Wassers ist nicht erfindungswesentlich und kann in breiten Bereichen variieren, um die Haltbarkeit der Komponenten, die Durchmischung der Bestandteile und auch die Auftragung der vermischten Zusammensetzung sowie die nachfolgende Trocknung zu optimieren. Beispielsweise kann die Menge zugesetzten ("freien") Wassers in der ersten separaten Komponente 0 bis 10 Gew.-% oder 2 bis 8 Gew.-%, bezogen auf das Gesamtgewicht der ersten separaten Komponente betragen und/oder in der zweiten separaten Komponente 15 Gew.-% bis 65 Gew.-% oder 20 bis 55 Gew.-%, bezogen auf das Gesamtgewicht der zweiten separaten Komponente betragen. Ein vorteilhafter Gesamtwassergehalt der vermischten Zusammensetzung beträgt beispielsweise 30 bis 50 Gew.-% oder 35 bis 45 Gew.-%.

Das erfindungsgemäße Mehrkomponentensystem kann beispielsweise auf die folgende Weise hergestellt werden: Wasser, nichtreaktives Bindemittel und die Additive und Dispergierharze werden vorgelegt. Sodann werden die Füllstoffe langsam eingerührt und danach dispergiert. Die MF-Kapseln (Slurry) werden dann langsam eingerührt, die Reaktivverdünner und die Gelatinekapseln werden unter Rühren zugegeben, und dann werden pH-Wert und Viskosität eingestellt. Der Initiatorteil kann hergestellt werden, indem man Wasser vorlegt, das Natriumperoxodisulfat darin löst und dann unter Rühren die BPO-Kapseln zugibt. Die beiden Teile (reaktiver Teil und Initiatorteil) können vereinigt werden, indem man den reaktiven Teil (die erste Komponente) vorlegt und den Initiatorteil (die zweite Komponente) unter Rühren zugibt. Wenn nötig, z.B. für besondere Schrauben, kann dann noch die Viskosität mit Wasser eingestellt werden. Der Auftrag kann manuell erfolgen, wird aber normalerweise maschinell durchgeführt z.B. mit einer Discmaschine, einer Linearbeschichtungsanlage oder einer semiautomatischen Beschichtungsanlage. Nach dem Auftragen der erfindungsgemäßen wässrigen Zusammensetzung wird die Zusammensetzung typischerweise getrocknet, sodass ein grifffester Film auf beispielsweise der beschichteten Schraube, beispielsweise im Gewindebereich verbleibt. Dieser Film, diese Beschichtung, hat idealerweise dieselbe Trocken-Zusammensetzung wie die wässrige Zusammensetzung vor Auftragung, bezogen auf die Festkörperanteile.

Das erfindungsgemäße Mehrkomponentensystem bzw. die erfindungsgemäße Zusammensetzung findet bevorzugt Verwendung zur Verbesserung der Topfzeit ("potlife"), der Prozesssicherheit und/oder zur Beschichtung eines Befestigungsmittels, insbesondere einer Schraube, um das Losbrechmoment des Befestigungsmittels zu erhöhen und/oder die Dichtigkeit der Verbindung des Befestigungsmittels zu verbessern.

Die Erfindung betrifft daher auch ein solches Befestigungsmittel, insbesondere Schraube, das mit der erfindungsgemäßen Zusammensetzung beschichtet ist, insbesondere wenn es erhalten ist durch Auftragen des erfindungsgemäßen Mehrkomponentensystems oder der erfindungsgemäßen Zusammensetzung auf das Befestigungsmittel und nachfolgendes Trocknen.

### Beispiele:

### Beispiel 1

Eine erste Komponente 1.1 wurde unter Verwendung einer Aufschlämmung ("Slurry") von Melaminformaldehydkapseln und Gelatinekapseln mit jeweils identischer innerer Phase aus TMPTA, einem Amin-Beschleuniger und (meth)acryliertem Epoxyharz hergestellt. Zur Einstellung einer geeigneten Viskosität wurden reaktive und unreaktive Füllstoffe, Verdicker und Reaktivverdünner (Polyethylenglykoldimethacrylat) zugegeben.

Eine zweite Komponente 1.2 wurde unter Verwendung eines Hauptbindemittels und eines Dispergierharzes für die Füllstoffe, Füllstoffen, Prozeßadditiven zur Benetzung, Entschäumung, Entlüftung und gegen Flugrost hergestellt. Mittels eines Wasserwachses wurde die Reibzahl eingestellt (als typische Reibzahl wurde 0,25 gewählt), und die farbgebenden Komponenten (Pigmente) wurden zugesetzt. Das Initiatorsystem bestehend aus Natriumpersulfat (NAPS) und verkapseltem Dibenzoylperoxid wurde zugesetzt. Der pH-Wert (7 - 7,5) und die Viskosität (25 - 50 [DIN 6/sec]) wurden mit Wasser und Natronlauge eingestellt.

Das Mehrkomponentensystem wies die folgende Zusammensetzung 1 auf (Festkörperanteil, Gew.-%):

**Tabelle 1**

| | | | |
|---|---|---|---|
| | 40,57 | Bindemittel ((meth)acryliertes Epoxyharz) | 16,03 |
| | | Vernetzer (TMPTMA) | 16,23 |
| Melamin-Formaldehyd-Kapseln | | Beschleuniger (Amin) | 0,19 |
| der ersten Komponente | | MF-Hülle | 8,11 |
| Gelatinekapseln der ersten Komponente | 2,54 | Bindemittel ((meth)acryliertes Epoxyharz) | 1,13 |
| | | Vernetzer (TMPTMA) | 1,14 |
| | | Beschleuniger (Amin) | 0,01 |
| | | Gelatine-Hülle | 0,25 |
| reaktive Füllstoffe | 1,69 | | |
| Olefin-funktionelles Polyurethan (unverkapselt) | 11,83 | | |
| Reaktivverdünner Polyethylenglykoldimethacrylat | 1,69 | | |
| Reaktivverdünner Methacryloylethoxysuccinat | 0,51 | | |
| Gelatinekapseln mit Dibenzoylperoxid | 6,34 | Weichmacher | 4,62 |
| | | Dibenzoylperoxid | 0,82 |
| | | Gelatine-Hülle | 0,91 |
| Natriumperoxodisulfat | 1,27 | | |
| Unreaktives Polyesterharz | 8,45 | | |
| Weitere Zusätze (Biozid, Farbstoffe/Pigmente, pigmentaffines Copolymer, nichtreaktive Füllstoffe, Netzmittel, Rostinhibitor, Wachs) | 25,05 | | |
| NaOH | 0,05 | | |
| Summe | 99,99 | | |

### Beispiel 2

Es wurde eine erfindungsgemäße Zusammensetzung als Beschichtung auf eine Gewindeschraube aufgetragen und 24 Stunden bei Raumtemperatur getrocknet. Dann wurden die Schrauben mit Muttern verschraubt und 24 Stunden bei Raumtemperatur getrocknet und das Losbrechmoment gemessen. (Beispiel 2a). Als Vergleich wurde auf eine identische Gewindeschraube eine ansonsten identische Zusammensetzung aufgetragen, die sich vom Beispiel 2a darin unterschied, dass der verkapselte Dibenzoylperoxid-Initiator und der unverkapselte Natriumperoxodisulfat-Initiator durch unverkapselten Dibenzoylperoxid-Initiator in derselben molaren Menge ersetzt wurde, und unter denselben Bedingungen getrocknet und verschraubt (Vergleichsbeispiel 2b). Als weiterer Vergleich wurde Vergleichsbeispiel 2b wiederholt, bei dem der unverkapselter Dibenzoylperoxid-Initiator in gleicher molarer Menge durch verkapselten Dibenzoylperoxid-Initiator ersetzt wurde (Vergleichsbeispiel 2c). Schließlich wurde als weiterer Vergleich Vergleichsbeispiel 2a wiederholt, bei dem der unverkapselter Dibenzoylperoxid-Initiator in gleicher molarer Menge durch unverkapselten Natriumperoxodisulfat-Initiator ersetzt wurde (Vergleichsbeispiel 2d).

Es zeigt sich ein überraschender synergistischer Effekt der erfindungsgemäß eingesetzten Initiatorkombination, indem das Losbrechmoment der erfindungsgemäß beschichteten Schraube (Beispiel 2a) nach Verschrauben und Härten mit knapp 20 [Nm] beträchtlich höher ist als bei den Vergleichsbeispielen, nahezu doppelt so hoch wie im Falle der Vergleichsbeispiele 2b (12 [Nm]) und 2d (10 [Nm]) und immerhin etwa 25% höher als bei Vergleichsbeispiel 2c (16 [Nm]).

In einer Abwandlung des Vergleichsversuchs wurden eine erfindungsgemäße Zusammensetzung enthaltend unverkapseltes Natriumpersulfat und verkapseltes Benzoylperoxid (Beispiel 2e) und zum Vergleich eine ansonsten identische Zusammensetzung (Vergleichsbeispiel 2f) enthaltend unverkapseltes Natriumpersulfat und unverkapseltes Benzoylperoxid im gleichen molaren Verhältnis wie in Beispiel 2e angefertigt. Bereits 2 Stunden nach Ansetzen ist in Vergleichsbeispiel 2f eine weiße Separation beobachtbar, während das erfindungsgemäße Beispiel 2e noch nach 4 Tagen Lagerung bei 40 °C konstant homogen bleibt.

Die Zusammensetzungen 2e und 2f wurden als Beschichtung auf je eine Gewindeschraube aufgetragen und 24 Stunden bei Raumtemperatur getrocknet. Dann wurden die Schrauben mit Muttern verschraubt und 24 Stunden bei Raumtemperatur getrocknet und nach 24 Stunden aufgebrochen. Der Versuch wurde jeweils nach einem Tag und nach 4 Tagen Lagerung der Zusammensetzung bei 40 °C wiederholt. Während die Losbrechmomente unter Verwendung der erfindungsgemäßen Zusammensetzung 2e im wesentlichen konstant blieben, konnte die mit Vergleichsbeisiel 2f beschichtete Schraube bereits nach 24 Stunden Lagerung nicht mehr verschraubt werden, da die Beschichtung fest geworden war.

### Beispiel 3

Es wurde eine erfindungsgemäße Zusammensetzung mit verkapseltem Dibenzoylperoxid-Initiator und unverkapseltem Natriumdioxopersulfat, enthaltend nur eine Sorte reaktiver Mikrokapseln der ersten Komponente mit Melamin-Formaldehyd-Hülle als Beschichtung auf eine Gewindeschraube aufgetragen und 24 Stunden bei Raumtemperatur getrocknet. Dann wurden die Schrauben mit Muttern verschraubt und 24 Stunden bei Raumtemperatur getrocknet (Beispiel 3a). Dieselbe Zusammensetzung wurde auf eine weitere Gewindeschraube aufgetragen und 24 Stunden bei Raumtemperatur getrocknet. Dann wurden die Schrauben mit Muttern verschraubt, 24 Stunden bei Raumtemperatur getrocknet und anschließend 3 Stunden bei 150 °C behandelt (Beispiel 3b). Beispiel 3a und 3b wurden wiederholt, wobei der erfindungsgemäßen Zusammensetzung Gelatinekapseln der ersten Komponente zugesetzt wurden und zum stöchiometrischen Ausgleich zusätzlich sowohl verkapselter Dibenzoylperoxid-Initiator, als auch unverkapselter Natriumperoxodisulfat-Initiator zugegeben wurde (Beispiele 3c und 3d), sowie ohne Zusatz von Gelatinekapseln der ersten Komponente, jedoch mit zusätzlichem verkapseltem Dibenzoylperoxid-Initiator, als auch unverkapseltem Natriumperoxodisulfat-Initiator (Beispiele 3e und 3f).

Es zeigt sich ein überraschender synergistischer Effekt der beiden unterschiedlichen Kapseln der ersten Komponente, indem das Losbrechmoment bei vergleichbarer stöchiometrischer Menge an polymerisierbarem (meth)acrylatfunktionellem Bindemittel deutlich höher ist, wenn es in Gestalt von sowohl Kapseln mit Melamin-Formamid-Hülle, als auch in Gestalt von Kapseln mit Gelatine-Hülle vorliegt, wobei sich dieser Effekt unabhängig von den Trocknungs- und Alterungsbedingungen der Beschichtung zeigt. Der direkte Vergleich mit einer analogen Erhöhung des Initiatoranteils - ohne die zusätzliche Kapselart - führt nur zu geringen Erhöhungen des Losbrechmoments.

**Tabelle 2: Zusammensetzungen der Zweikomponentensysteme (Gew.-% unter Einbeziehung des Wassers)**

| Gew.-% | Beispiele 3a/3b | | Beispiele 3c/3d | | Beispiele 3e/3f | |
|---|---|---|---|---|---|---|
| Zugegebenes Wasser | 4,80 | | 4,76 | | 4,76 | |
| Melamin-Formaldehyd-Kapseln der ersten Komponente (wässrige Aufschlämmung) | 41,00 | | 38,67 | | 41,00 | |
| Gelatinekapseln der ersten Komponente | - | | 3,87 | | - | |
| reaktive Füllstoffe | 5,13 | | 4,87 | | 5,13 | |
| Bindemittel (unverkapselt) | 20,53 | | 19,33 | | 20,53 | |
| Gelatinekapseln mit Dibenzoylperoxid | 2,29 | | 2,50 | | 2,50 | |
| Natriumperoxodisulfat | 0,46 | | 0,50 | | 0,50 | |
| Unreaktives Polyesterharz | 5,25 | | 5,21 | | 5,21 | |
| Weitere Zusätze (Biozid, Farbstoffe/Pigmente, pigmentaffines Copolymer, nichtreaktive Füllstoffe, Netzmittel, Rostinhibitor, Wachs); | 17,24 | | 17,1 | | 17,1 | |
| Wasser | 2,82 | | 2,80 | | 2,80 | |
| NaOH (10%) | 0,47 | | 0,47 | | 0,47 | |
| Summe | 99,99 | | 100,08 | | 100 | |
| | | | | | | |
| Losbrechmomente [Nm] | 3a | 3b | 3c | 3d | 3e | 3f |
| | | 150 °C | | 150 °C | | 150 °C |
| | 22 | 10 | 25 | 12 | 23 | 10 |

## Patentansprüche

1. Mehrkomponentensystem umfassend eine erste Komponente, eine zweite Komponente und gegebenenfalls eine oder mehrere weitere Komponenten,
wobei die erste Komponente Kapseln enthaltend polymerisierbares (meth)acrylatfunktionelles Bindemittel und Wasser umfaßt und
wobei die zweite Komponente Peroxodisulfat-Initiator, verkapselten Dibenzoylperoxid-Initiator und Wasser umfaßt.

2. Mehrkomponentensystem nach Anspruch 1, **dadurch gekennzeichnet, dass** die erste Komponente Kapseln, insbesondere Mikrokapseln umfaßt, wobei die Kapseln, insbesondere Mikrokapseln, eine Hülle und eine innere Phase aufweisen, wobei die innere Phase polymerisierbares (meth)acrylatfunktionelles Bindemittel und optional Vernetzer, insbesondere (meth)acrylfunktionellen Vernetzer umfaßt, optional einen oder mehrere Beschleuniger umfaßt und wobei das polymerisierbare (meth)acrylatfunktionelle Bindemittel bevorzugt ausgewählt ist aus der Gruppe bestehend aus (meth)acryliertem Epoxyharz, (meth)acryliertem Polyurethan, (meth)acrylatfunktionellem Bindemittel auf Bisphenol-A-Basis, (meth)acrylatfunktionellem Bindemittel auf Novolak -Basis und Gemischen davon.

3. Mehrkomponentensystem nach Anspruch 2, **dadurch gekennzeichnet, dass** der Vernetzer ausgewählt ist aus (meth)acrylfunktionellen Monomeren, insbesondere aus der Gruppe bestehend aus Trimethylpropan-tri(meth)acrylat, ); 1,3-Butandiol-dimethacrylat (BGDMA); Tripropylenglycol-diacrylate (TRPGDA); Trimethylolpropanetrimethacrylat (TMPTMA), Isocyanurattri(meth)acrylat, PETA Pentaerythritoltetra(meth)acrylat, DiPETA DiPentaerythritoltetra(meth)acrylat, Dipentaerythritolpentaacrylat, insbesondere bestehend aus Trimethylpropan-tri(meth)acrylat.

4. Mehrkomponentensystem nach einem der Ansprüche 1 bis 3, **dadurch gekennzeichnet, dass** die erste Komponente zusätzlich eine oder mehrere unverkapselte polymerisierbare Komponente(n) enthält, bevorzugt unverkapseltes Reaktivbindemittel und/oder Reaktivverdünner, optional zusätzlich Füllstoffe und/oder Verdicker.

5. Mehrkomponentensystem nach einem der Ansprüche 1 bis 4, **dadurch gekennzeichnet, dass** die erste Komponente mindestens zwei verschiedene Arten Kapseln umfaßt, die sich mindestens in dem Material ihrer jeweiligen Hülle unterscheiden, wobei bevorzugt eine Kapselart eine Melamin-Formaldehyd-Hülle und eine zweite Kapselart eine Gelatine-Hülle aufweist und wobei bevorzugt beide Kapselarten Mikrokaseln sind.

6. Mehrkomponentensystem nach Anspruch 5, **dadurch gekennzeichnet, dass** die erste Kapselart und die zweite Kapselart jeweils eine innere Phase aufweisen, die polymerisierbares (meth)acrylatfunktionelles Bindemittel, bevorzugt (meth)acryliertes Epoxyharz und optional Vernetzer umfaßt.

7. Mehrkomponentensystem nach Anspruch 5 oder 6, **dadurch gekennzeichnet, dass** die inneren Phasen der ersten Kapselart und der zweiten Kapselart die gleichen Bestandteile aufweisen, bevorzugt dadurch dass die Kapseln der ersten Komponente 10 bis 88 Gew.-%, besonders bevorzugt 30 bis 60 Gew.-% (meth)acrylatfunktionelles Bindemittel, 10 bis 88 Gew.-%, bevorzugt 20 bis 60 Gew.-% Vernetzer, insbesondere methacrylfunktionellen Vernetzer, und bis zu 2, insbesondere 0,2 bis 1 Gew.-% Beschleuniger enthalten, jeweils als Trockengewicht bezogen auf den Festkörperanteil der Kapseln der ersten Komponente.

8. Mehrkomponentensystem nach einem der Ansprüche 5 bis 7, **dadurch gekennzeichnet, dass**
a) die Kapseln der ersten Komponente mit Melamin-Formaldehyd-Hülle enthalten:
12 bis 28 Gew.%, besonders bevorzugt 15 bis 25 Gew.-%, ganz besonders etwa 20 Gew.-% Hülle;
30 bis 50 Gew.-%, besonders bevorzugt 35 bis 45 Gew.-%, ganz besonders etwa 40 Gew. polymerisierbares (meth)acrylatfunktionelles Bindemittel;
30 bis 50 Gew.-%, besonders bevorzugt 35 bis 45 Gew.-%, ganz besonders etwa 40 Gew.-%Vernetzer;
0,1 bis 1,0 Gew.-%, besonders bevorzugt 0,3 bis 0,7 Gew.-%, ganz besonders etwa 0,5 Gew.-% Beschleuniger, jeweils bezogen auf den Festkörperanteil der Kapseln;
und/oder
b) die Kapseln der ersten Komponente mit Gelatine-Hülle enthalten:
5 bis 20 Gew.%, besonders bevorzugt 7 bis 15 Gew.-% Hülle, ganz besonders etwa 10 Gew.-% Hülle;
35 bis 55 Gew.-%, besonders bevorzugt 40 bis 50 Gew.-%, ganz besonders etwa 45 Gew.-% polymerisierbares (meth)acrylatfunktionelles Bindemittel;
35 bis 55 Gew.-%, besonders bevorzugt 40 bis 50 Gew.-%, ganz besonders etwa 45 Gew.-% Vernetzer;
0,1 bis 1,0 Gew.-%, besonders bevorzugt 0,3 bis 0,7 Gew.-% Beschleuniger, ganz besonders etwa 0,5 Gew.-%, jeweils bezogen auf den Festkörperanteil der Kapseln.

9. Mehrkomponentensystem nach einem der Ansprüche 1 bis 7, **dadurch gekennzeichnet, dass** die polymerisierbaren Bestandteile der ersten Komponente im Wesentlichen radikalisch polymerisierbar sind.

10. Mehrkomponentensystem nach einem der Ansprüche 1 bis 9, **dadurch gekennzeichnet, dass** die zweite Komponente unverkapselten wasserlöslichen Peroxodisulfat-Initiator und verkapselten Dibenzoylperoxyd-Initiator enthält, wobei die den Dibenzoylperoxid-Initiator enthaltenden Kapseln, insbesondere Mikrokaseln, der zweiten Komponente eine Hülle, insbesondere eine Gelatine-Hülle, und eine innere Phase aufweisen, wobei die innere Phase den Dibenzoylperoxid-Initiator bevorzugt dispergiert in Weichmacher, insbesondere phthalatfreiem Weichmacher enthält und wobei die den Dibenzoylperoxid-Initiator enthaltenden Kapseln, insbesondere Mikrokapseln der zweiten Komponente bevorzugt 4 bis 35, insbesondere 6 bis 25 Gew.-%, besonders bevorzugt 10 bis 15 Gewichtsprozent Dibenzoylperoxid-Initiator dispergiert in 55 bis 90, insbesondere 60 bis 85 Gew.-%, besonders bevorzugt 70 bis 80 Gew.-% Weichmacher, insbesondere phthalatfreiem Weichmacher enthalten, jeweils bezogen auf das Gewicht der Kapseln der zweiten Komponente.

11. Mehrkomponentensystem nach einem der Ansprüche 1 bis 10, **dadurch gekennzeichnet, dass** der Peroxodisulfat-Initiator Natriumperoxodisulfat-Initiator umfasst, bevorzugt Natriumperoxodisulfat-Initiator ist.

12. Mehrkomponentensystem nach einem der Ansprüche 1 bis 11, **dadurch gekennzeichnet, dass** es weitere Bestandteile enthält, insbesondere nichtreaktives Harz, Wachs, Pigmente, pigmentaffine Polymere, Füllstoffe, Netzmittel, Biozide, Haftverbesserer, Entschäumer, Additive zur Entlüftung und/oder Rostinhibitoren.

13. Mehrkomponentensystem nach einem der Ansprüche 1 bis 12, **dadurch gekennzeichnet, dass** das System enthält, jeweils bezogen auf den Festkörperanteil:
25 bis 55 Gewichtsteile, bevorzugt 30 bis 50 Gewichtsteile, insbesondere 36 bis 44 Gewichtsteile Kapseln enthaltend polymerisierbares (meth)acrylatfunktionelles Bindemittel;
0 bis 20 Gewichtsteile, bevorzugt 5 bis 17 Gewichtsteile, insbesondere 10 bis 14 Gewichtsteile unverkapseltes Reaktivbindemittel;
0 bis 3,8 Gewichtsteile, bevorzugt 0.5 bis 3 Gewichtsteile, insbesondere 1,5 bis 2,3 Gewichtsteile unverkapselter Reaktivverdünner;
1 bis 15 Gewichtsteile, bevorzugt 3 bis 10 Gewichtsteile, insbesondere 5 bis 8 Gewichtsteile Kapseln enthaltend Dibenzoylperoxid-Initiator;
0,3 bis 5 Gewichtsteile, bevorzugt 0,6 bis 4 Gewichtsteile, insbesondere 0,9 bis 2 Gewichtsteile, besonders bevorzugt 1,1 bis 1,5 Gewichtsteile Peroxodisulfat-Initiator;
1 bis 70 Gewichtsteile, bevorzugt 10 bis 60 Gewichtsteile, insbesondere 20 bis 50 Gewichtsteile, besonders bevorzugt 30 bis 40 Gewichtsteile weitere Bestandteile.

14. Zusammensetzung, hergestellt durch Vermischung der wässrigen Komponenten des Mehrkomponentensystems nach einem der Ansprüche 1 bis 13.

15. Verwendung des Mehrkomponentensystems gemäß einem der Ansprüche 1 bis 13 als Dichtmittel und/oder Klebstoff zur Beschichtung von Befestigungsmitteln, insbesondere zur Beschichtung von Schrauben.

16. Verwendung des Mehrkomponentensystems gemäß einem der Ansprüche 1 bis 13 oder der Zusammensetzung nach Anspruch 14 zur Verbesserung der Topfzeit, der Prozesssicherheit und/oder zur Beschichtung eines Befestigungsmittels, insbesondere einer Schraube, um das Losbrechmoment des Befestigungsmittels zu erhöhen und/oder die Dichtigkeit der Verbindung des Befestigungsmittels zu verbessern.

17. Befestigungsmittel, insbesondere Schraube, **dadurch gekennzeichnet, dass** es mit der Zusammensetzung gemäß Anspruch 14 beschichtet ist.

18. Befestigungsmittel gemäß Anspruch 17, erhältlich durch Auftragen des Mehrkomponentensystems nach einem der Ansprüche 1 bis 13 oder der Zusammensetzung gemäß Anspruch 14 auf das Befestigungsmittel und nachfolgendes Trocknen.

## Claims

1. Multicomponent system comprising a first component, a second component and optionally one or more further components,
wherein the first component comprises capsules containing polymerizable (meth)acrylate functional binder and water, and
wherein the second component comprises peroxodisulfate initiator, encapsulated dibenzoyl peroxide initiator and water.

2. A multicomponent system according to claim 1, **characterized in that** the first component comprises capsules, in particular microcapsules, wherein the capsules, in particular microcapsules, have a shell and an inner phase, wherein the inner phase comprises polymerizable (meth)acrylate-functional binder and optionally crosslinker, in particular (meth)acryl-functional crosslinker, optionally comprising one or more accelerators and wherein the polymerizable (meth)acrylate-functional binder is preferably selected from the group consisting of (meth)acrylated epoxy resin, (meth)acrylated polyurethane, bisphenol-Abased (meth)acrylate-functional binder, novolak-based (meth)acrylate-functional binder and mixtures thereof.

3. A multicomponent system according to claim 1, **characterized in that** the crosslinker is selected from (meth)acrylic functional monomers, in particular selected from the group consisting of trimethylpropane tri(meth)acrylate, 1,3-butanediol dimethacrylate (BGDMA); tripropylene glycol diacrylate (TRPGDA); trimethylolpropane trimethacrylate (TMPTMA), isocyanurate tri(meth)acrylate, PETA pentaerythritol tetra(meth)acrylate, DiPETA dipentaerythritol tetra(meth)acrylate, dipentaerythritol pentaacrylate, in particular consisting of trimethylpropane tri(meth)acrylate.

4. Multicomponent system according to one of claims 1 to 3, **characterized in that** the first component additionally contains one or more non-encapsulated polymerizable component(s), preferably non-encapsulated reactive binder and/or reactive diluent, optionally additionally fillers and/or thickeners.

5. Multicomponent system according to any one of claims 1 to 4, **characterized in that** the first component comprises at least two different types of capsules which differ at least in the material of their respective shells, preferably one type of capsule having a melamine-formaldehyde shell and a second type of capsule having a gelatin shell, and preferably both types of capsules being microcapsules.

6. Multicomponent system according to claim 5, **characterized in that** the first type of capsule and the second type of capsule each have an inner phase comprising polymerizable (meth)acrylate-functional binder, preferably (meth)acrylated epoxy resin and optionally crosslinker.

7. Multicomponent system according to claim 5 or 6, **characterized in that** the inner phases of the first type of capsule and of the second type of capsule have the same constituents, preferably **in that** the capsules of the first component contain 10 to 88% by weight, particularly preferably 30 to 60% by weight, of (meth)acrylate-functional binder, 10 to 88% by weight, preferably 20 to 60% by weight, of crosslinker, in particular methacrylic-functional crosslinker, and up to 2, in particular 0.2 to 1 % by weight of accelerator, in each case as dry weight based on the solids content of the capsules of the first component.

8. Multicomponent system according to one of claims 5 to 7, **characterized in that**
a) the capsules of the first component with melamine-formaldehyde shell contain:
12 to 28 wt.%, particularly preferably 15 to 25 wt.%, especially about 20 wt.% shell;
30 to 50 % by weight, particularly preferably 35 to 45 % by weight, especially about 40 % by weight of polymerizable (meth)acrylate-functional binder;
30 to 50 % by weight, particularly preferably 35 to 45 % by weight, especially about 40 % by weight of crosslinker;
0.1 to 1.0 % by weight, particularly preferably 0.3 to 0.7 % by weight, especially about 0.5 % by weight of accelerator, in each case based on the solids content of the capsules;
and/or
b) the capsules of the first component with a gelatine shell contain:
5 to 20 % by weight, particularly preferably 7 to 15 % by weight of shell, especially about 10 % by weight of shell;
35 to 55 % by weight, particularly preferably 40 to 50 % by weight, especially about 45 % by weight of polymerizable (meth)acrylate-functional binder;
35 to 55 wt.%, particularly preferably 40 to 50 wt.%, especially about 45 wt.% crosslinker;
0.1 to 1.0 % by weight, particularly preferably 0.3 to 0.7 % by weight of accelerator, especially about 0.5 % by weight, in each case based on the solids content of the capsules.

9. Multicomponent system according to any one of claims 1 to 7, **characterized in that** the polymerizable constituents of the first component are essentially radically polymerizable.

10. Multicomponent system according to one of claims 1 to 9, **characterized in that** the second component contains non-encapsulated water-soluble peroxodisulfate initiator and encapsulated dibenzoyl peroxide initiator, the capsules, in particular microcapsules, of the second component containing the dibenzoyl peroxide initiator having a shell, in particular a gelatin shell, and an inner phase, the inner phase containing the dibenzoyl peroxide initiator preferably dispersed in plasticizer, in particular phthalate-free plasticizer, and wherein the capsules, in particular microcapsules, of the second component containing the dibenzoyl peroxide initiator preferably contain 4 to 35, in particular 6 to 25, % by weight, particularly preferably 10 to 15 % by weight of dibenzoyl peroxide initiator dispersed in 55 to 90, particularly 60 to 85 % by weight, particularly preferably 70 to 80 % by weight of plasticizer, particularly phthalate-free plasticizer, in each case based on the weight of the capsules of the second component.

11. Multicomponent system according to any one of claims 1 to 10, **characterized in that** the peroxodisulfate initiator comprises sodium peroxodisulfate initiator, preferably wherein the peroxodisulfate initiator is sodium peroxodisulfate initiator.

12. Multicomponent system according to one of claims 1 to 11, **characterized in that** it contains further constituents, in particular non-reactive resin, wax, pigments, pigment-affine polymers, fillers, wetting agents, biocides, adhesion promoters, defoamers, additives for deaeration and/or rust inhibitors.

13. multicomponent system according to one of claims 1 to 12, **characterized in that** the system contains, in each case based on the solids content:
25 to 55 parts by weight, preferably 30 to 50 parts by weight, in particular 36 to 44 parts by weight of capsules containing polymerizable (meth)acrylate-functional binder;
0 to 20 parts by weight, preferably 5 to 17 parts by weight, in particular 10 to 14 parts by weight of non-encapsulated reactive binder;
0 to 3.8 parts by weight, preferably 0.5 to 3 parts by weight, in particular 1.5 to 2.3 parts by weight of non-encapsulated reactive diluent;
1 to 15 parts by weight, preferably 3 to 10 parts by weight, in particular 5 to 8 parts by weight of capsules containing dibenzoyl peroxide initiator;
0.3 to 5 parts by weight, preferably 0.6 to 4 parts by weight, in particular 0.9 to 2 parts by weight, especially preferably 1.1 to 1.5 parts by weight of peroxodisulfate initiator;
1 to 70 parts by weight, preferably 10 to 60 parts by weight, in particular 20 to 50 parts by weight, especially preferably 30 to 40 parts by weight of other ingredients.

14. Composition prepared by mixing the aqueous components of the multicomponent system according to any one of claims 1 to 13.

15. Use of the multicomponent system according to any one of claims 1 to 13 as a sealant and/or adhesive for coating fasteners, in particular for coating screws.

16. Use of the multicomponent system according to one of claims 1 to 13 or the composition according to claim 14 for improving the pot life, the process reliability and/or for coating a fastener, in particular a screw, in order to increase the breakaway torque of the fastener and/or to improve the tightness of the joint of the fastener.

17. Fastener, in particular a screw, **characterized in that** it is coated with the composition according to claim 14.

18. Fastener according to claim 17, obtainable by applying the multicomponent system according to one of claims 1 to 13 or by applying the composition according to claim 14 to the fastener and subsequent drying.

## Revendications

1. Système multicomposant comprenant un premier composant, un deuxième composant et éventuellement un ou plusieurs autres composants,
ledit premier composant comprenant des capsules contenant un liant à fonction (méth)acrylate polymérisable et de l'eau, et
ledit deuxième composant comprenant un amorceur peroxodisulfate, un amorceur peroxyde de dibenzoyle encapsulé et de l'eau.

2. Système multicomposant selon la revendication 1, **caractérisé en ce que** le premier composant comprend des capsules, notamment des microcapsules, lesdites capsules et notamment microcapsules présentant une enveloppe et une phase interne, ladite phase interne comprenant un liant à fonction (méth)acrylate polymérisable et éventuellement un réticulant, notamment un réticulant à fonction (méth)acrylique, comprenant éventuellement un ou plusieurs accélérateurs ; ledit liant à fonction (méth)acrylate polymérisable étant de préférence choisi dans le groupe constitué par la résine époxy (méth)acrylée, le polyuréthane (méth)acrylé, le liant à fonction (méth)acrylate à base de bisphénol A, le liant à fonction (méth)acrylate à base de novolaque et leurs mélanges.

3. Système multicomposant selon la revendication 2, **caractérisé en ce que** le réticulant est choisi parmi les monomères à fonction (méth)acrylique, notamment dans le groupe constitué par le tri(méth)acrylate de triméthylpropane, le diméthacrylate de 1,3-butanediol (BGDMA), le diacrylate de tripropylène glycol (TRPGDA), le triméthacrylate de triméthylolpropane (TMPTMA), le tri(méth)acrylate d'isocyanurate, le tétra(méth)acrylate de pentaérythritol (PETA), le tétra(méth)acrylate de dipentaérythritol (DiPETA), le pentaacrylate de dipentaérythritol, notamment constitué par le tri(méth)acrylate de triméthylpropane.

4. Système multicomposant selon l'une des revendications 1 à 3, **caractérisé en ce que** le premier composant contient en outre un ou plusieurs composants polymérisables non encapsulés, de préférence un liant réactif non encapsulé et/ou un diluant réactif, éventuellement en outre des charges et/ou des épaississants.

5. Système multicomposant selon l'une des revendications 1 à 4, **caractérisé en ce que** le premier composant comprend au moins deux types différents de capsules qui diffèrent au moins par le matériau de leur enveloppe respective ; un type de capsule ayant de préférence une enveloppe en mélamine-formaldéhyde et un deuxième type de capsule ayant de préférence une enveloppe en gélatine, lesdits deux types de capsules étant de préférence des microcapsules.

6. Système multicomposant selon la revendication 5, **caractérisé en ce que** le premier type de capsule et le deuxième type de capsule présentent chacun une phase interne contenant un liant à fonction (méth)acrylate polymérisable, de préférence une résine époxy (méth)acrylée et éventuellement un réticulant.

7. Système multicomposant selon la revendication 5 ou 6, **caractérisé en ce que** les phases internes du premier type de capsule et du deuxième type de capsule ont les mêmes constituants, de préférence **en ce que** les capsules du premier composant contiennent 10 à 88 % en poids, de préférence 30 à 60 % en poids, de liant à fonction (méth)acrylate, 10 à 88 % en poids, de préférence 20 à 60 % en poids, de réticulant, notamment de réticulant à fonction méthacrylique, et jusqu' à 2 %, notamment 0,2 à 1 % en poids, d'accélérateur, chacun exprimé en poids sec par rapport à la teneur en matières solides des capsules du premier composant.

8. Système multicomposant selon l'une des revendications 5 à 7, **caractérisé en ce que**
a) les capsules du premier composant à enveloppe en mélamine-formaldéhyde contiennent :
12 à 28 % en poids, de préférence 15 à 25 % en poids, plus préférablement environ 20 % en poids d'enveloppe,
30 à 50 % en poids, de préférence 35 à 45 % en poids, plus préférablement environ 40 % en poids de liant à fonction (méth)acrylate polymérisable,
30 à 50 % en poids, de préférence 35 à 45 % en poids, plus préférablement environ 40 % en poids de réticulant ;
0,1 à 1,0 % en poids, de préférence 0,3 à 0,7 % en poids, plus préférablement environ 0,5 % en poids d'accélérateur, chacun exprimé par rapport à la teneur en solides des capsules ;
et/ou
b) les capsules du premier composant à enveloppe de gélatine contiennent :
5 à 20 % en poids, de préférence 7 à 15 % en poids d'enveloppe, plus préférablement environ 10 % en poids d'enveloppe,
35 à 55 % en poids, de préférence 40 à 50 % en poids, plus préférablement environ 45 % en poids de liant à fonction (méth)acrylate polymérisable,
35 à 55 % en poids, de préférence 40 à 50 % en poids, plus préférablement environ 45 % en poids de réticulant,
0,1 à 1,0 % en poids, de préférence 0,3 à 0,7 % en poids d'accélérateur, plus préférablement environ 0,5 % en poids, chacun exprimé par rapport à la teneur en solides des capsules.

9. Système multicomposant selon l'une des revendications 1 à 7, **caractérisé en ce que** les constituants polymérisables du premier composant sont essentiellement polymérisables par voie radicalaire.

10. Système multicomposant selon l'une des revendications 1 à 9, **caractérisé en ce que** le deuxième composant contient un amorceur peroxodisulfate hydrosoluble non encapsulé et un amorceur peroxyde de dibenzoyle encapsulé, lesdites capsules - notamment microcapsules - qui contiennent un amorceur peroxyde de dibenzoyle du deuxième composant présentant une enveloppe, notamment en gélatine, et une phase interne, ladite phase interne contenant l'amorceur peroxyde de dibenzoyle, de préférence dispersé dans un plastifiant, notamment un plastifiant sans phtalate, et lesdites capsules - notamment microcapsules - qui contiennent l'amorceur peroxyde de dibenzoyle du deuxième composant contenant de préférence 4 à 35 %, notamment 6 à 25 % en poids, et de préférence 10 à 15 % en poids d'amorceur peroxyde de dibenzoyle dispersé dans 55 à 90 %, notamment 60 à 85 % en poids, et de préférence 70 à 80 % en poids de plastifiant, notamment de plastifiant sans phtalate, chacun exprimé par rapport au poids des capsules du deuxième composant.

11. Système multicomposant selon l'une des revendications 1 à 10, **caractérisé en ce que** l'amorceur peroxodisulfate comprend un amorceur peroxodisulfate de sodium et est de préférence un amorceur peroxodisulfate de sodium.

12. Système multicomposant selon l'une des revendications 1 à 11, **caractérisé en ce qu'**il contient d'autres constituants, notamment de la résine non réactive, de la cire, des pigments, des polymères ayant une affinité avec les pigments, des charges, des agents mouillants, des biocides, des promoteurs d'adhérence, des antimousses, des additifs de dégazage et/ou des inhibiteurs de rouille.

13. Système multicomposant selon l'une des revendications 1 à 12, **caractérisé en ce qu'**il contient, par rapport à la teneur en matières solides :
25 à 55 parties en poids, de préférence 30 à 50 parties en poids, notamment 36 à 44 parties en poids de capsules contenant un liant à fonction (méth)acrylate polymérisable,
0 à 20 parties en poids, de préférence 5 à 17 parties en poids, notamment 10 à 14 parties en poids de liant réactif non encapsulé,
0 à 3,8 parties en poids, de préférence 0,5 à 3 parties en poids, notamment 1,5 à 2,3 parties en poids de diluant réactif non encapsulé,
1 à 15 parties en poids, de préférence 3 à 10 parties en poids, notamment 5 à 8 parties en poids de capsules contenant un amorceur peroxyde de dibenzoyle,
0,3 à 5 parties en poids, de préférence 0,6 à 4 parties en poids, notamment 0,9 à 2 parties en poids, de manière particulièrement préférée 1,1 à 1,5 partie en poids d'amorceur peroxodisulfate,
1 à 70 parties en poids, de préférence 10 à 60 parties en poids, notamment 20 à 50 parties en poids, de manière particulièrement préférée 30 à 40 parties en poids d'autres constituants.

14. Composition préparée par mélange des composants aqueux du système multicomposant selon l'une quelconque des revendications 1 à 13.

15. Utilisation du système multicomposant selon l'une des revendications 1 à 13 comme produit d'étanchéité et/ou adhésif pour enduire des moyens de fixation, notamment des vis.

16. Utilisation du système multicomposant selon l'une des revendications 1 à 13 ou de la composition selon la revendication 14 pour améliorer la durée de conservation en pot ou la fiabilité des processus et/ou pour revêtir un moyen de fixation, notamment une vis, afin d'augmenter le couple de desserrage du moyen de fixation et/ou d'améliorer l'étanchéité de la liaison réalisée avec le moyen de fixation.

17. Moyen de fixation, notamment vis, **caractérisé en ce qu'**il est enduit de la composition selon la revendication 14.

18. Moyen de fixation selon la revendication 17, pouvant être obtenu par application, sur le moyen de fixation, du système multicomposant selon l'une quelconque des revendications 1 à 13 ou de la composition selon la revendication 14 et séchage ultérieur.
